# EUROPEAN PATENT SPECIFICATION

(11) **EP 2 445 141 B1**
(45) Date of publication and mention of the grant of the patent: **20.03.2019**
(21) Application number: 10813243.2
(22) Date of filing: 25.03.2010
(51) Int. Cl.: H04L 12/24

(54) **PROCESSING METHOD AFTER CONFIGURATION UPDATE FAILURE AND NETWORK ELEMENT DEVICE THEREOF**
VERARBEITUNGSVERFAHREN NACH KONFIGURATIONSAKTUALISIERUNGSFEHLER UND NETZWERKELEMENTVORRICHTUNG
PROCÉDÉ DE TRAITEMENT APRÈS ÉCHEC D'UNE MISE À JOUR DE CONFIGURATION ET DISPOSITIF D'ÉLÉMENT DE RÉSEAU ASSOCIÉ

(30) Priority: 04.09.2009 CN 200910171454
(43) Date of publication of application: 25.04.2012
(73) Proprietor: ZTE Corporation, Shenzhen City, Guangdong Province 518057 (CN)
(72) Inventor: WANG, Yi, Shenzhen City Guangdong Province 518057 (CN)
(74) Representative: Novagraaf Technologies
(86) International application number: PCT/CN2010/071316
(87) International publication number: WO 2011/026321

(56) References cited:
- EP-A2- 1 259 028
- WO-A1-99/17203
- CN-A- 1 725 658
- CN-A- 101 277 296
- US-A1- 2002 157 018
- US-B1- 7 385 938
- ENNS R ET AL: "NETCONF Configuration Protocol; draft-ietf-netconf-prot-11.txt", 20060208, vol. netconf, no. 11, 8 February 2006 (2006-02-08), XP015043928, ISSN: 0000-0004
- '3rd Generation Partnership Project; Technical Specification Group Radio Access Network; Evolved Universal Terrestrial Radio Access Network (E-UTRAN); S1 Application Protocol (S1AP) (Release 8)' 3GPP TS 36.413 V8.6.1, [Online] June 2009, pages 48 - 50, XP050352916 Retrieved from the Internet: <URL:http://www.3gpp.org/ftp/Specs/archive/ 36_series/36.413/36413-861.zip> [retrieved on 2010-04-27]

## Description

### Technical Field

The present invention relates to the field of mobile communication technology, and more particularly, to a network element device and a processing method after configuration update between an evolved NodeB (eNodeB, eNB) and its adjacent network element mobility management entities (MMEs) (or other adjacent eNBs) in the long term evolution (LTE) system fails.

### Background of the Related Art

In the LTE system, after a connection is established between an eNB and its adjacent network element MMEs (or other adjacent eNBs) through a setup message (such as S1 SETUP or X2 SETUP), when relevant information at the eNB side changes, the eNB sends a Configuration Update message (such as an eNB Configuration Update message) to notify its adjacent network element devices, that is, the adjacent MMEs (or other adjacent eNBs). If the eNB receives Configuration Update Failure messages (such as eNB Configuration Update Failure messages) responded by all the adjacent network elements after sending out the eNB Configuration Update message, it is shown that the change of the relevant information at the eNB side is not accepted by its adjacent network elements. At this point, if the update failure messages returned by the adjacent network elements contain a Time to Wait information element (such as Time to Wait IE (Information Element)), the initiator eNB and its adjacent network elements that send the update failure messages will maintain their own configurations, and the initiator eNB will wait for at least the time length indicated in the Time To Wait IE, and then resends the eNB Configuration Update message to the MMEs (or other adjacent eNBs). If the update failure messages returned by the adjacent network elements do not contain the Time To Wait IE message, then the relevant protocol does not specify what the eNB initiator should do. In this case, if the new configuration at the initiator eNB side has taken effect, and the MMEs (or other adjacent eNBs) do not accept configuration update of the initiator eNB, there may be a phenomenon that resources at both sides are not consistent, which would cause serious consequences for the whole system, possibly resulting in the entire network being unable to operate normally.

If the configuration update of the initiator eNB fails to be accepted by at least one of its adjacent MMEs (or at least one of its adjacent eNBs) but is successfully accepted by other adjacent MMEs (or other adjacent eNBs), that is, after the initiator eNB sends an eNB Configuration Update message to all its adjacent MMEs (or eNBs) due to the configuration update, it receives an eNB Configuration Update Failure message (which does not contain the Time To Wait IE) responded by at least one MME (or eNB), and receives Configuration Update Acknowledge messages (such as eNB Configuration Update Acknowledge messages) responded by other MMEs (or other eNBs), then at this point in addition to the phenomenon that resources of the initiator eNB and resources of the MME (eNB) returning a failure response are not consistent, there is the case that the resources of the initiator eNB between all its adjacent MMEs (or eNBs) are not consistent, which would cause serious consequences for the whole system as well, possibly resulting in the entire network being unable to operate normally.

Likewise, as relevant information at the MME side changes, the MME sends a Configuration Update message (such as an MME Configuration Update message) to notify its adjacent network element eNBs. If the MME receives MME Configuration Update Failure messages responded by all its adjacent eNBs after sending the MME Configuration Update message, it is shown that the configuration update at the MME side is not accepted by the eNB side. At this point, if the MME Configuration Update Failure messages returned by the adjacent eNBs contain a Time To Wait IE, the initiator MME and the eNBs will maintain their respective configurations and after the initiator MME waits for at least the time length indicated in the Time To Wait IE, it will resends the MME Configuration Update message to its adjacent eNBs. If the MME Configuration Update Failure message returned by the adjacent eNBs does not contain the Time To Wait IE, then the relevant protocol does not specify what the initiator MME should do. In this case, since the eNB does not accept the configuration update of the initiator MME, there is also the phenomenon that resources at both sides are not consistent, which would cause serious consequences for the whole system, possibly resulting in the entire network being unable to operate normally.

If the configuration update of the initiator MME fails to be accepted by at least one of its adjacent eNBs but is successfully accepted by other adjacent eNBs, that is, after the initiator MME sends an MME Configuration Update message to all its adjacent eNBs due to the configuration update, it receives an MME Configuration Update Failure message (which does not contain the Time To Wait IE) responded by at least one eNB, and receives MME Configuration Update Acknowledge messages responded by other eNBs, then at this point in addition to the phenomenon that resources of the initiator MMR and resources of the eNB returning a failure response are not consistent, there is the case that the resources of the initiator MME between all its adjacent eNBs are not consistent, which would cause serious consequences for the whole system as well, possibly resulting in the entire network being unable to operate normally.

The document WO9917203A1 discloses the cluster configuration database is a distributed configuration database wherein a consistent copy of the configuration database is maintained on each active node of the cluster. Each node in the cluster maintains its own copy of the configuration database and node in a lock-step manner. If any node experiences a failure, the configuration database uses a reconfiguration protocol to insure consistent data in each node of the cluster. The cluster configuration database uses a two-level consistency update framework to insure consistent data among the nodes. Each local configuration database uses a self-contained consistency record to uniquely identify and stamp each copy of the configuration database. Additionally, the cluster configuration database uses a two-phase commit protocol to guarantee the copies of the configuration database are consistent among the nodes.

The document "ENNS R ET AL: NETCONF Configuration protocol; draft-ietf-netconf-port-11.txt; XP015043928" discloses mechanisms to install, manipulate, and delete the configuration of data network devices. It uses an Extensible Markup Language (XML) based data encoding for the configuration data as well as the protocol messages. The NETCONF protocol operations are realized on top of a simple Remote Procedure Call layer.

### Content of the Invention

The present invention provides a processing method after configuration update failure and a network element device so as to roll a configuration back to the one prior to configuration update after the configuration update fails, thereby effectively ensuring the consistency of resources among all network elements and further ensuring that the network can be used reliably.

In order to solve the existing technical problem, a method according to claim 1 and a network element device according to claim 6 are provided. Further improvements and embodiments are provided in the dependent claims.

Also provided is a processing method after configuration update failure which comprises:
after a configuration of a first network element device changes, the first network element device sending a configuration update message to all its adjacent network element devices;
if the first network element device receives a configuration update failure message returned by any of its adjacent network element devices, and the configuration update failure message does not contain information instructing the first network element device to perform subsequent processing, the first network element device rolling its configuration back to the one prior to configuration update; and
the first network element device resending the configuration update message to all its adjacent network element devices in the rolled-back configuration.

The processing method might also have the following feature: after the first network element device resends the configuration update message, it summarizes failure reasons in the configuration update failure message and reports them to a network management system.

The processing method might also have the following feature: the first network element device is an eNB in a long term evolution system, and the adjacent network element devices comprise adjacent eNBs and/or mobility management entities.

The processing method might also have the following feature: the first network element device is a mobility management entity in a long term evolution system, and the adjacent network element devices comprise adjacent eNBs.

The processing method might also have the following feature: the information of the subsequent processing comprises: instructing the first network element device to resend the configuration update message to all its adjacent network element devices after waiting for a preset period of time.

Also provided is a network element device which comprises: a communication unit, a configuration information update unit, and a configuration information processing unit, wherein
the configuration information update unit is configured to update a configuration and send the updated configuration information to the communication unit, and roll the configuration back to the one prior to configuration update after receiving rollback information sent by the configuration information processing unit, and send configuration information prior to the configuration update to the communication unit;
the communication unit is configured to send the received configuration information to all the adjacent network element devices through a configuration update message, receive response messages returned by all the adjacent network elements and send the received response messages to the configuration information processing unit; and
the configuration information processing unit is configured to analyze a response message, and if finding out that the response message does contain a configuration update failure message, which does not contain information instructing the local network element device to perform subsequent processing, send rollback information to the configuration information update unit.

The network element device might also have the following feature:
the configuration information processing unit is further configured to summarize failure reasons in the configuration update failure message, and send the summarized failure reasons to the communication unit; and
the communication unit is further configured to send the summarized failure reasons to a network management system.

The network element device might also have the following feature:
the communication unit is further configured to receive configuration update messages sent by all of its adjacent network elements, send the configuration update messages to the configuration information processing unit, and send the configuration update failure message sent by the information processing unit to all the adjacent network element devices that send the configuration update messages; and
the configuration information processing unit is further configured to analyze the received configuration update messages, and if finding out that the configuration update messages contain mismatched configuration information, send a configuration update failure message to the communication unit.

The network element device might also have the following feature: the network element device is an eNB in a long term evolution system, and the adjacent network element devices comprise adjacent eNBs and/or mobility management entities.

The network element device might also have the following feature : the network element device is a mobility management entity in a long term evolution system, and the adjacent network elements comprise adjacent eNBs.

In summary, the processing method after configuration update failure and the network element device in accordance with the present invention can roll a configuration back to the one prior to configuration update when the configuration update fails, so as to effectively ensure the consistency of resources among all the network elements and further ensure that the network can be used reliably. Meanwhile, because a network element device whose configuration changes also summarizes failure reasons and reports the reasons to the background for operation and maintenance personnel to analyze, it provides possibility for correction of data configuration errors existing in the current configuration update process, thereby ensuring the continuous optimization of the network and enhancing the robustness and stability of the system.

### Brief Description of Drawings

FIG. 1 is a schematic diagram of a network element device in accordance with an embodiment of the present invention.
FIG. 2 is a flow chart of a processing method when a configuration update failure message not containing a Time To Wait IE exists in a Configuration Update Response message received by an eNB and returned by its adjacent MMEs in accordance with the first embodiment of the present invention.
FIG. 3 is a flow chart of a processing method when a configuration update failure message not containing a Time To Wait IE exists in a Configuration Update Response message received by an eNB and returned by its adjacent eNBs in accordance with the second embodiment of the present invention.
FIG. 4 is a flow chart of a processing method when a configuration update failure message not containing a Time To Wait IE exists in a Configuration Update Response message received by an MME and returned by its adjacent eNBs in accordance with the third embodiment of the present invention.

### Preferred Embodiments of the Present Invention

The technical scheme of the present invention will be described in further detail in conjunction with the accompanying drawings and embodiments.

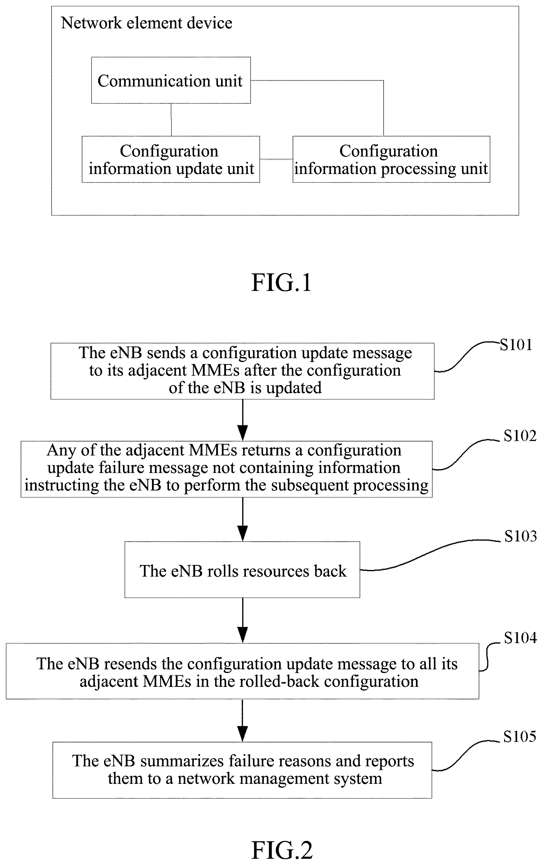

FIG. 1 is a schematic diagram of a network element device in accordance with an embodiment of the present invention. As shown in FIG. 1, a network element device in accordance with this embodiment may be an eNB or MME in the LTE system, and network element devices adjacent to the eNB comprises MMEs and/or other eNBs, and network element devices adjacent to the MME comprise eNBs .

The network element devices in accordance with this embodiment comprise a communications unit, a configuration information unit update and a configuration information processing unit.

The configuration information update unit is configured to update a configuration and send the updated configuration information to the communication unit, and roll the configuration back to the one prior to configuration update after receiving rollback information sent by the configuration information processing unit, and send configuration information prior to the configuration update to the communication unit.

The communication unit is configured to send the received configuration information to all the adjacent network element devices through a configuration update message, receive response messages returned by all the adjacent network elements and send the received response messages to the configuration information processing unit.

The configuration information processing unit is configured to analyze a response message, and if finding out that the response message does contain a configuration update failure message, which does not contain information instructing the local network element device to perform subsequent processing, send rollback information to the configuration information update unit. The configuration information processing unit is further configured to summarize failure reasons in the configuration update failure message, and send the failure reasons to the communication unit, which reports the failure reasons to a network management system.

The communication unit in accordance with this embodiment is further configured to receive configuration update messages sent by other adjacent network elements and send the configuration update messages to the configuration information processing unit.

The configuration information processing unit is further configured to analyze the received configuration update messages, and if finding out that the configuration update messages contain mismatched or unacceptable configuration information, send a configuration update failure message, which does not contain information instructing the network element devices that send the configuration update messages to perform subsequent processing, to the communication unit, which sends the configuration update failure message to the network element devices that send the configuration update messages.

A processing method after configuration update failure in accordance with the present invention will be described in detail by taking network element devices which are eNBs or MMEs as example.

### The first embodiment:

An embodiment of a processing method when a configuration update failure message not containing a Time To Wait IE exists in a Configuration Update Response message received by an initiator eNB and returned by its adjacent MMEs will be described in detail below in conjunction with FIG. 2. The processing method after configuration update failure in accordance with this embodiment comprises the following steps.

S101, the eNB sends a configuration update message to its adjacent MMEs after the configuration of the eNB is updated.

Assuming that the initiator ENB is A, on which there is cell 1, and a track area code (TAC) corresponding to cell 1 is 11. A is connected to two MMEs, B and C respectively. eNB A establishes connections with MME B and MME C via S1 SETUP, and eNB A, MME B, and MME C operate normally. With the background manual operation, cell 2 is newly added in eNB A, and the TAC corresponding to cell 2 is 22.

Since the configuration of eNB A changes, eNB A sends an eNB Configuration Update message, which contains configuration (including TAC information corresponding to cells 1 and 2) of eNB A that currently has taken effect, to MME B and MME C respectively.

S102, any of the adjacent MMEs returns a configuration update failure message not containing information instructing the eNB to perform the subsequent processing.

Assuming that MME B returns an eNB Configuration Update Acknowledge message to eNB A, and MME C returns an eNB Configuration Update Failure message not containing the information (such as Time To Wait IE) instructing the eNB to perform the subsequent processing to eNB A. At this point, the information such as the TAC corresponding to cells 1 and 2 in eNB A has taken effect in both eNB A and eNB B, while there is only information, such as the TAC corresponding to cell 1 in eNB A, in MME C. Obviously, resources between eNB A and MME C are not consistent, and resources regarding eNB A between MME B and MME C are not consistent either.

S103, after the eNB receives the configuration update failure message returned by any of its adjacent MMEs and not containing the information instructing the eNB to perform the subsequent processing, the eNB rolls the resources back and rolls its configuration back to the one prior to the configuration update.

eNB A rolls the resources back, and rolls the configuration back to the one prior to the current eNB configuration update, that is, eNB A deletes cell 2 (including other information corresponding to cell 2), and returns the configuration back to the one prior to the current eNB A configuration update process, that is, eNB A contains only relevant information of cell 1.

S104, the eNB resends the configuration update message to all its adjacent MMEs in the rolled-back configuration.

eNB A reinitiates a new eNB A configuration update process to MME B and MMEC respectively in the resources rolled-back configuration, that is, the configuration (i.e., containing only cell 1 and its relevant information) of eNB A prior to the current configuration update process. Since the previous configuration of eNB A is accepted by both MME B and MME C, the reinitiated eNB A configuration update process will certainly be successful, thus ensuring the consistency of resources among eNB A, MME B and MME C, and further ensuring that the network can be used reliably.

S105, the eNB summarizes failure reasons in the received configuration update failure message not containing the information instructing the eNB to perform the subsequent processing, and reports the failure reasons to a network management system.

eNB A reports the failure reasons in the eNB Configuration Update Failure message returned by MME C in the current configuration process to the background or the network management system for the operation and maintenance personnel to analyze and decide whether to reconfigure data after correcting relevant data of cell 2, so as to initiate the next eNB A configuration update process, thereby providing possibility for correction of data configuration errors existing in the current configuration update process, further ensuring the continuous optimization of the network and enhancing the robustness and stability of the system.

### The second embodiment:

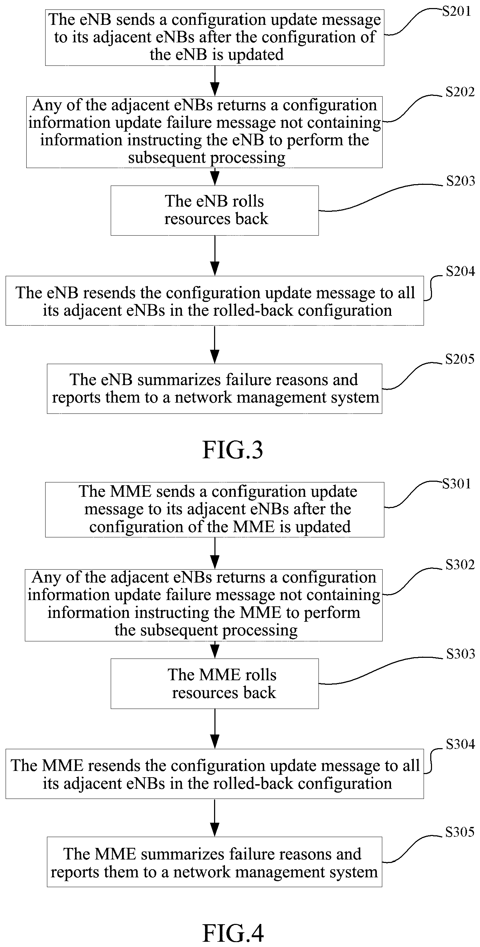

An embodiment of a processing method when a configuration update failure message not containing information instructing an eNB to perform subsequent processing exists in a Configuration Update Response message received by an initiator eNB and returned by its adjacent eNBs will be described in detail below in conjunction with FIG. 3. The processing method after configuration update failure in accordance with this embodiment comprises the following steps.

S201, the eNB sends a configuration update message to its adjacent MMEs after the configuration of the eNB is updated.

Assuming that the initiator eNB is A, on which there is cell 1, and a Mobility Country Code (MCC) to which cell 1 belongs is 460, and its Mobility Net Code (MNC) is 1. A is connected to two eNBs, B and C respectively. eNB A establishes connections with eNB B and eNB C via X2 SETUP, and eNB A, eNB B, and eNB C operate normally. With the background manual operation, cell 2 is newly added in eNB A, and the MCC of cell 2 is 460, and its MNC is 2.

Since the configuration of eNB A changes, eNB A sends an eNB Configuration Update message, which contains configuration (including cell 2 and its MCC and MNC information) of eNB A that currently newly added, to MME B and MME C respectively.

S202, any of the adjacent eNBs returns a configuration update failure message not containing information instructing the eNB to perform the subsequent processing.

Assuming that eNB B returns an eNB Configuration Update Acknowledge message to eNB A, and eNB C returns an eNB Configuration Update Failure message not containing the information (such as Time To Wait IE) instructing the eNB to perform the subsequent processing to eNB A. At this point, the relevant information corresponding to cell 2 in eNB A has taken effect in both eNB A and eNB B, and not in eNB C. Obviously, resources between eNB A and eNB C are not consistent, and resources regarding eNB A between eNB B and eNB C are not consistent either.

S203, after the eNB receives the configuration update failure message returned by any of its adjacent eNBs and not containing the information instructing the eNB to perform the subsequent processing, the eNB rolls the resources back and rolls its configuration back to the one prior to the configuration update.

eNB A rolls the resources back, and rolls the configuration back to the one prior to the current eNB configuration update, that is, eNB A deletes cell 2 (including other information corresponding to cell 2), and returns the configuration back to the one prior to the current eNB A configuration update process, that is, eNB A contains only relevant information of cell 1.

S204, the eNB resends the configuration update message to all its adjacent eNBs in the rolled-back configuration.

eNB A reinitiates a new eNB A configuration update process to eNB B and eNB C respectively in the resources rolled-back configuration, that is, the configuration (i.e., containing only cell 1 and its relevant information) of eNB A prior to the current configuration update process. Since at this point, the reinitiated eNB A configuration update process, for the eNB B, is to delete the relevant information of cell 2, and it is an empty operation for eNB C and thus is acceptable for both eNB B and eNB C, that is, the reinitiated eNB A configuration update process will certainly be successful, thus ensuring the consistency of resources among eNB A, eNB B and eNB C, and further ensuring that the network can be used reliably.

S205, the eNB summarizes failure reasons in the received configuration update failure message not containing the information instructing the eNB to perform the subsequent processing, and reports the failure reasons to a network management system.

eNB A reports the failure reasons in the eNB Configuration Update Failure message returned by eNB C in the current configuration process to the background or the network management system for the operation and maintenance personnel to analyze and decide whether to reconfigure data after correcting relevant data of cell 2, so as to initiate the next eNB A configuration update process, thereby providing possibility for correction of data configuration errors existing in the current configuration update process, further ensuring the continuous optimization of the network and enhancing the robustness and stability of the system.

The adjacent network elements of the initiator eNB illustrated in the first and second embodiments are the MMEs and the eNBs respectively. Of course, the adjacent network elements of the initiator eNB might have both the MMEs and the eNBs, in this case, the processing method after the configuration update of the initiator eNB fails is similar to the processing method described in the first and second embodiments, and will be not repeated here.

### The third embodiment:

An embodiment of a processing method when a configuration update failure message not containing information instructing an MME to perform subsequent processing exists in a Configuration Update Response message received by an initiator MME and returned by its adjacent eNBs will be described in detail below in conjunction with FIG. 4. The processing method after configuration update failure in accordance with this embodiment comprises the following steps.

S301, the eNB sends a configuration update message to its adjacent MMEs after the configuration of the eNB is updated.

Assuming that the initiator MME is A, the current MCC of MME A is 460, and its MNC is 1. MME A is connected to two eNBs, B and C respectively. eNB A establishes connections with eNB B and eNB C via S1 SETUP, and eNB A, eNB B, and eNB C operate normally. With the background manual operation, new configuration with the MCC being 460 and the MNC being 2 is added newly in MME A.

Since the configuration of MME A changes, MME A sends an MME Configuration Update message, which contains configuration (including configuration information with the MCC being 460 and the MNC being 1 and configuration information with the MCC being 460 and the MNC being 2) currently newly added in MME A, to eNB B and eNB C.

S302, any of the adjacent eNBs returns a configuration update failure message not containing information instructing the MME to perform the subsequent processing.

Assuming that eNB B returns an MME Configuration Update Acknowledge message to MME A, and eNB C returns an MME Configuration Update Failure to MME A not containing the information (such as Time To Wait IE) instructing the MME to perform the subsequent processing. At this point, configuration information with the MCC being 460 and the MNC being 2 is newly added in the MME A and has taken effect in both eNB A and eNB B, not in eNB C. Obviously, resources between MME A and eNB C are not consistent, and resources regarding MME A between eNB B and eNB C are not consistent either.

S303, after the MME receives the configuration update failure message returned by any of its adjacent eNBs and not containing the information instructing the MME to perform the subsequent processing, the MME rolls the resources back and rolls its configuration back to the one prior to the configuration update.

MME A rolls the resources back, and rolls the configuration back to the one prior to the current eNB configuration update, that is, MME A deletes the newly added configuration with the MCC being 460 and the MNC being 2, and returns the configuration back to the one prior to the current MME A configuration update process, that is, MME A contains only relevant information with the MCC being 460 and the MNC being 1.

S304, the MME resends the configuration update message to all its adjacent eNBs in the rolled-back configuration.

MME A reinitiates a new MME A configuration update process to eNB B and eNB C respectively in the resource rolled-back configuration, that is, the configuration (i.e., containing only the relevant information regarding the MCC of 460 and the MNC of 1) of MME A prior to the current configuration update process. Since the previous configuration of MME A is accepted by both eNB B and eNB C, the reinitiated MME configuration update process will certainly be successful, thus ensuring the consistency of resources among eNB A, eNB B and eNB C, and further ensuring that the network can be used reliably.

S105, the MME summarizes failure reasons in the received configuration update failure message not containing the information instructing the MME to perform the subsequent processing, and reports the failure reasons to a network management system.

MME A reports the failure reasons in the MME Configuration Update Failure message returned by eNB C currently to the background or the network management system for the operation and maintenance personnel to analyze and decide whether to reconfigure data after correcting relevant data regarding the MCC of 460 and the MNC of 1, so as to initiate the next MME configuration update process, thereby providing possibility for correction of data configuration errors existing in the current configuration update process, further ensuring the continuous optimization of the network and enhancing the robustness and stability of the system.

Using the network element devices and the processing method in accordance with the embodiments of the present invention, since a network element device whose configuration changes analyzes results of the currently initiated configuration update process, when there is a failure response message not containing the information instructing the network element device to perform the subsequent processing, the network element device rolls resources back, and re-initiates the configuration update process in the rolled-back configuration. Since the rolled-back configuration (that is, the previous configuration) is accepted by all the adjacent network element devices, the reinitiated configuration update process will certainly be successful, thus effectively ensuring the consistency of resources among all the network elements, and further ensuring that the network can be used reliably. Meanwhile, because the network element device whose configuration changes also summarizes failure reasons in the configuration failure response message not containing the information instructing the network element device to perform the subsequent processing and reports the reasons to the background for the operation and maintenance personnel to analyze, it provides possibility for correction of data configuration errors existing in the current configuration update process, thereby ensuring the continuous optimization of the network and enhancing the robustness and stability of the system.

The above embodiments are only examples illustrating the processing method after configuration update failure and the network element device in accordance with the present invention, and should not be interpreted as limitations of the present invention. According to the description the technical scheme as well as its preferred embodiments of the present invention, various possible variations or substitutions may be made, and all these variations or substitutions should belong to the protection scope of the claims of the present invention.

### Industrial Applicability

Compared with the prior art, the method and network element device in accordance with the embodiments of the present invention ensure effectively the consistency of resources between the network element device and all its adjacent network element devices, and further ensure that the network can be used reliably. Meanwhile, the method and network element device also provide possibility for correction of data configuration errors existing in the current configuration update process, thereby ensuring the continuous optimization of the network and enhancing the robustness and stability of the system.

## Claims

1. A processing method after configuration update failure, **characterized by** comprising:
after a configuration of a first network element device changes, the first network element device sending a configuration update message to all its adjacent network element devices (S101, S201, S301);
if the first network element device receives a configuration update failure message returned by any of its adjacent network element devices, and the configuration update failure message does not contain information instructing the first network element device to perform subsequent processing (S102, S202, S302), the first network element device rolling its configuration back to the one prior to configuration update (S103, S203, S303); and
the first network element device resending the configuration update message to all its adjacent network element devices in the rolled-back configuration (S104, S204, S304).

2. The processing method according to claim 1, wherein after the step of the first network element device resending the configuration update message, the method further comprises:
the first network element summarizing failure reasons in the configuration update failure message and reporting them to a network management system (S105, S205, S305).

3. The processing method according to claim 1 or 2, wherein the first network element device is an eNB in a long term evolution system, and the adjacent network element devices comprise adjacent eNBs and/or mobility management entities.

4. The processing method according to claim 1 or 2, wherein the first network element device is a mobility management entity in a long term evolution system, and the adjacent network element devices comprise adjacent eNBs.

5. The processing method according to claim 1, wherein the information instructing the first network element device to perform the subsequent processing comprises: instructing the first network element device to resend the configuration update message to all its adjacent network element devices after waiting for a preset period of time.

6. A network element device, **characterized by** comprising a communication unit, a configuration information update unit, and a configuration information processing unit, wherein
the configuration information update unit is configured to update a configuration and send the updated configuration information to the communication unit, and roll the configuration back to the one prior to configuration update after receiving rollback information sent by the configuration information processing unit, and send configuration information prior to the configuration update to the communication unit;
the communication unit is configured to send the received configuration information to all the adjacent network element devices through a configuration update message, receive response messages returned by all the adjacent network elements and send the received response messages to the configuration information processing unit; and
the configuration information processing unit is configured to analyze a response message, and if finding out that the response message does contain a configuration update failure message, which does not contain information instructing the local network element device to perform subsequent processing, send rollback information to the configuration information update unit.

7. The network element device according to claim 6, wherein
the configuration information processing unit is further configured to summarize failure reasons in the configuration update failure message, and send the summarized failure reasons to the communication unit; and
the communication unit is further configured to send the summarized failure reasons to a network management system.

8. The network element device according to claim 6, wherein
the communication unit is further configured to receive configuration update messages sent by all of its adjacent network elements, send the configuration update messages to the configuration information processing unit, and send the configuration update failure message sent by the information processing unit to all the adjacent network element devices that send the configuration update messages; and
the configuration information processing unit is further configured to analyze the received configuration update messages, and if finding out that the configuration update messages contain mismatched configuration information, send a configuration update failure message to the communication unit.

9. The network element device according to any one of claims 6 to 8, wherein the network element device is an eNB in a long term evolution system, and the adjacent network element devices comprise adjacent eNBs and/or mobility management entities.

10. The network element device according to any one of claims 6 to 8, wherein the network element device is a mobility management entity in a long term evolution system, and the adjacent network elements comprise adjacent eNBs.

## Patentansprüche

1. Verarbeitungsverfahren nach Konfigurationsaktualisierungsfehlschlag, **dadurch gekennzeichnet, dass** es umfasst:
nachdem sich eine Konfiguration einer ersten Netzwerkelementvorrichtung ändert, Senden, durch die erste Netzwerkelementvorrichtung, einer Konfigurationsaktualisierungsnachricht an alle ihre benachbarten Netzwerkelementvorrichtungen (S101, S201, S301);
wenn die erste Netzwerkelementvorrichtung eine Konfigurationsaktualisierungs-Fehlschlagnachricht empfängt, die von einer ihrer benachbarten Netzwerkelementvorrichtungen zurückgegeben wird, und die Konfigurationsaktualisierungs-Fehlschlagnachricht keine Informationen enthält, die die erste Netzwerkelementvorrichtung dazu anweisen, anschließende Verarbeitung durchzuführen (S102, S202, S302), Zurücksetzen, durch die erste Netzwerkelementvorrichtung, ihrer Konfiguration auf diejenige vor Konfigurationsaktualisierung (S103, S203, S303); und
erneutes Senden, durch die erste Netzwerkelementvorrichtung, der Konfigurationsaktualisierungsnachricht an alle ihre benachbarten Netzwerkelementvorrichtungen in der zurückgesetzten Konfiguration (S104, S204, S304).

2. Verarbeitungsverfahren nach Anspruch 1, wobei nach dem Schritt des erneuten Sendens der Konfigurationsaktualisierungsnachricht durch die erste Netzwerkelementvorrichtung das Verfahren weiter umfasst:
Zusammenfassen, durch das erste Netzwerkelement, von Fehlschlagsursachen in der Konfigurationsaktualisierungs-Fehlschlagnachricht, und Melden derselben an ein Netzwerkverwaltungssystem (S105, S205, S305).

3. Verarbeitungsverfahren nach Anspruch 1 oder 2, wobei die erste Netzwerkelementvorrichtung ein eNB in einem Long Term Evolution-System ist, und die benachbarten Netzwerkelementvorrichtungen benachbarte eNBs und/oder Mobilitätsverwaltungsentitäten umfassen.

4. Verarbeitungsverfahren nach Anspruch 1 oder 2, wobei die erste Netzwerkelementvorrichtung eine Mobilitätsverwaltungsentität in einem Long Term Evolution-System ist, und die benachbarten Netzwerkelementvorrichtungen benachbarte eNBs umfassen.

5. Verarbeitungsverfahren nach Anspruch 1, wobei die Informationen, die die erste Netzwerkelementvorrichtung dazu anweisen, die anschließende Verarbeitung durchzuführen, umfassen: nach Abwarten eines voreingestellten Zeitraums Anweisen der ersten Netzwerkelementvorrichtung dazu, die Konfigurationsaktualisierungsnachricht erneut an alle ihre benachbarten Netzwerkelementvorrichtungen zu senden.

6. Netzwerkelementvorrichtung, **dadurch gekennzeichnet, dass** sie eine Kommunikationseinheit, eine Konfigurationsinformationen-Aktualisierungseinheit, und eine Konfigurationsinformationen-Verarbeitungseinheit umfasst, wobei
die Konfigurationsinformationen-Aktualisierungseinheit dazu konfiguriert ist, eine Konfiguration zu aktualisieren und die aktualisierten Konfigurationsinformationen an die Kommunikationseinheit zu senden, und nach Empfangen von Rücksetzinformationen, die von der Konfigurationsinformationen-Verarbeitungseinheit gesendet werden, die Konfiguration auf diejenige vor Konfigurationsaktualisierung zurückzusetzen, und Konfigurationsinformationen vor der Konfigurationsaktualisierung an die Kommunikationseinheit zu senden;
die Kommunikationseinheit dazu konfiguriert ist, die empfangenen Konfigurationsinformationen über eine Konfigurationsaktualisierungsnachricht an alle die benachbarten Netzwerkelementvorrichtungen zu senden, Antwortnachrichten, die von allen den benachbarten Netzwerkelementen zurückgegeben werden, zu empfangen, und die empfangenen Antwortnachrichten an die Konfigurationsinformationen-Verarbeitungseinheit zu senden; und
die Konfigurationsinformationen-Verarbeitungseinheit dazu konfiguriert ist, eine Antwortnachricht zu analysieren, und wenn sie herausfindet, dass die Antwortnachricht eine Konfigurationsaktualisierungs-Fehlschlagnachricht enthält, die keine Informationen enthält, welche die lokale Netzwerkelementvorrichtung dazu anweisen, anschließende Verarbeitung durchzuführen, Rücksetzinformationen an die Konfigurationsinformationen-Aktualisierungseinheit zu senden.

7. Netzwerkelementvorrichtung nach Anspruch 6, wobei
die Konfigurationsinformationen-Verarbeitungseinheit weiter dazu konfiguriert ist, Fehlschlagsursachen in der Konfigurationsaktualisierungs-Fehlschlagnachricht zusammenzufassen, und die zusammengefassten Fehlschlagsursachen an die Kommunikationseinheit zu senden; und
die Kommunikationseinheit weiter dazu konfiguriert ist, die zusammengefassten Fehlschlagsursachen an ein Netzwerkverwaltungssystem zu senden.

8. Netzwerkelementvorrichtung nach Anspruch 6, wobei
die Kommunikationseinheit weiter dazu konfiguriert ist, Konfigurationsaktualisierungsnachrichten zu empfangen, die von allen ihren benachbarten Netzwerkelementen gesendet werden, die Konfigurationsaktualisierungsnachrichten an die Konfigurationsinformationen-Verarbeitungseinheit zu senden, und die von der Informationsverarbeitungseinheit gesendete Konfigurationsaktualisierungs-Fehlschlagnachricht an alle die benachbarten Netzwerkelementvorrichtungen zu senden, die die Konfigurationsaktualisierungsnachrichten senden; und
die Konfigurationsinformationen-Verarbeitungseinheit weiter dazu konfiguriert ist, die empfangenen Konfigurationsaktualisierungsnachrichten zu analysieren, und wenn sie herausfindet, dass die Konfigurationsaktualisierungsnachrichten nicht übereinstimmende Konfigurationsinformationen enthalten, eine Konfigurationsaktualisierungs-Fehlschlagnachricht an die Kommunikationseinheit zu senden.

9. Netzwerkelementvorrichtung nach einem der Ansprüche 6 bis 8, wobei die Netzwerkelementvorrichtung ein eNB in einem Long Term Evolution-System ist, und die benachbarten Netzwerkelementvorrichtungen benachbarte eNBs und/oder Mobilitätsverwaltungsentitäten umfassen.

10. Netzwerkelementvorrichtung nach einem der Ansprüche 6 bis 8, wobei die Netzwerkelementvorrichtung eine Mobilitätsverwaltungsentität in einem Long Term Evolution-System ist, und die benachbarten Netzwerkelemente benachbarte eNBs umfassen.

## Revendications

1. Procédé de traitement après un échec de mise à jour de configuration, **caractérisé en ce qu'**il comprend :
après qu'une configuration d'un premier dispositif d'élément de réseau change, l'envoi, par le premier dispositif d'élément de réseau, d'un message de mise à jour de configuration à tous ses dispositifs d'élément de réseau adjacents (S101, S201, S301) ;
si le premier dispositif d'élément de réseau reçoit un message d'échec de mise à jour de configuration renvoyé par l'un quelconque de ses dispositifs d'élément de réseau adjacents et le message d'échec de mise à jour de configuration ne contient pas d'informations ordonnant au premier dispositif d'élément de réseau de réaliser un traitement subséquent (S102, S202, S302), la remise en arrière, par le premier dispositif d'élément de réseau, de sa configuration à celle avant la mise à jour de configuration (S103, S203, S303) ; et
le nouvel envoi, par le premier dispositif d'élément de réseau, du message de mise à jour de configuration à tous ses dispositifs d'élément de réseau adjacents dans la configuration remise en arrière (S104, S204, S304).

2. Procédé de traitement selon la revendication 1, dans lequel après l'étape de nouvel envoi, par le premier dispositif d'élément de réseau, du message de mise à jour de configuration, le procédé comprend en outre :
la récapitulation de raisons d'échec dans le message d'échec de mise à jour de configuration et le fait de les rapporter à un système de gestion de réseau (S105, S205, S305), par le premier élément de réseau.

3. Procédé de traitement selon la revendication 1 ou 2, dans lequel le premier dispositif d'élément de réseau est un eNB dans un système d'évolution à long terme et les dispositifs d'élément de réseau adjacents comprennent des eNB adjacents et/ou des entités de gestion de la mobilité.

4. Procédé de traitement selon la revendication 1 ou 2, dans lequel le premier dispositif d'élément de réseau est une entité de gestion de la mobilité dans un système d'évolution à long terme et les dispositifs d'élément de réseau adjacents comprennent des eNB adjacents.

5. Procédé de traitement selon la revendication 1, dans lequel les informations ordonnant au premier dispositif d'élément de réseau de réaliser le traitement subséquent comprennent : le fait d'ordonner au premier dispositif d'élément de réseau d'envoyer de nouveau le message de mise à jour de configuration à tous ses dispositifs d'élément de réseau adjacents après l'attente d'une période de temps prédéfinie.

6. Dispositif d'élément de réseau, **caractérisé en ce qu'**il comprend une unité de communication, une unité de mise à jour d'informations de configuration et une unité de traitement d'informations de configuration, dans lequel
l'unité de mise à jour d'informations de configuration est configurée pour mettre à jour une configuration et envoyer les informations de configuration mise à jour à l'unité de communication, et remettre la configuration en arrière vers la configuration avant la mise à jour de configuration après la réception d'informations de remise en arrière envoyées par l'unité de traitement d'informations de configuration, et envoyer des informations de configuration avant la mise à jour de configuration à l'unité de communication ;
l'unité de communication est configurée pour envoyer les informations de configuration reçues à tous les dispositifs d'élément de réseau adjacents par le biais d'un message de mise à jour de configuration, recevoir des messages de réponse renvoyés par tous les éléments de réseau adjacents et envoyer les messages de réponse reçus à l'unité de traitement d'informations de configuration ; et
l'unité de traitement d'informations de configuration est configurée pour analyser un message de réponse, et s'il est découvert que le message de réponse contient un message d'échec de mise à jour de configuration, qui ne contient pas d'informations ordonnant au dispositif d'élément de réseau local de réaliser un traitement subséquent, envoyer des informations de remise en arrière à l'unité de mise à jour d'informations de configuration.

7. Dispositif d'élément de réseau selon la revendication 6, dans lequel
l'unité de traitement d'informations de configuration est en outre configurée pour récapituler des raisons d'échec dans le message d'échec de mise à jour de configuration, et envoyer les raisons d'échec récapitulées à l'unité de communication ; et
l'unité de communication est en outre configurée pour envoyer les raisons d'échec récapitulées à un système de gestion de réseau.

8. Dispositif d'élément de réseau selon la revendication 6, dans lequel
l'unité de communication est en outre configurée pour recevoir des messages de mise à jour de configuration envoyés par tous ses éléments de réseau adjacents, envoyer les messages de mise à jour de configuration à l'unité de traitement d'informations de configuration, et envoyer le message d'échec de mise à jour de configuration envoyé par l'unité de traitement d'informations à tous les dispositifs d'élément de réseau adjacents qui envoient les messages de mise à jour de configuration ; et
l'unité de traitement d'informations de configuration est en outre configurée pour analyser les messages de mise à jour de configuration reçus, et s'il est découvert que les messages de mise à jour de configuration contiennent des informations de configuration incohérentes, envoyer un message d'échec de mise à jour de configuration à l'unité de communication.

9. Dispositif d'élément de réseau selon l'une quelconque des revendications 6 à 8, dans lequel le dispositif d'élément de réseau est un eNB dans un système d'évolution à long terme et les dispositifs d'élément de réseau adjacents comprennent des eNB adjacents et/ou des entités de gestion de la mobilité.

10. Dispositif d'élément de réseau selon l'une quelconque des revendications 6 à 8, dans lequel le dispositif d'élément de réseau est une entité de gestion de la mobilité dans un système d'évolution à long terme et les éléments de réseau adjacents comprennent des eNB adjacents.
